**Europäisches Patentamt**

**European Patent Office**

**Office européen des brevets**

(11) Veröffentlichungsnummer: **0 365 839**
**A2**

## EUROPÄISCHE PATENTANMELDUNG

(21) Anmeldenummer: 89117644.8

(22) Anmeldetag: 25.09.89

(51) Int. Cl.⁵: **B60Q 1/04**

(30) Priorität: 22.10.88 DE 3836086

(43) Veröffentlichungstag der Anmeldung:
02.05.90 Patentblatt 90/18

(84) Benannte Vertragsstaaten:
**DE ES FR GB IT**

(71) Anmelder: **Hella KG Hueck & Co.**
**Rixbecker Strasse 75 Postfach 28 40**
**D-4780 Lippstadt(DE)**

(72) Erfinder: **Schatka, Wilhelm**
**Schultenstrasse 24**
**D-4780 Lippstadt(DE)**

(54) **Fahrzeugscheinwerfer.**

(57) Aufgrund von fertigungsbedingten Toleranzen in der Karosserie kommt es oft zu Spalten bzw. Ritzen zwischen Leuchten und Stoßfängern, die sich nachteilig für die Aerodynamik und dem ästhetischen Aussehen auswirken. Deshalb ist es erforderlich, ein kostengünstiges und einfaches Mittel zu gestalten, das sich in die Fertigung des Scheinwerfergehäuses integrieren läßt und dadurch die Toleranzen ausgleicht. Zu diesem Zweck wird außen an die Gehäusewand des Scheinwerfers eine radial nach außen weisende Lasche angeformt, die einen nach rückwärts weisenden federnden Festpunkt bildenden, in die Karosserie eingreifbaren Zapfen aufweist, auf den eine Gleitscheibe aufgeschoben und zwischen Gleitscheibe und Lasche eine Druckfeder eingesetzt ist. Das erfindungsgemäße Mittel findet seine Anwendung vorrangig im Fahrzeugbau, inbesondere im PKW-Bereich.

EP 0 365 839 A2

## Fahrzeugscheinwerfer

Die Erfindung bezieht sich auf einen Fahrzeugscheinwerfer, mit einem von einer Streuscheibe abgedeckten Gehäuse, welches verstellbar in einen Karosserieausschnitt einsetzbar ist und einer der Verstellpunkte als Federelement ausgebildet ist.

Eine solche Erfindung ist bereits für eine Leuchteneinheit, bestehend aus Scheinwerfer und Blinkleuchte, aus der DE-OS 31 05 691 bekannt. Hierbei wird die Blinkleuchte über ein federndes Befestigungselement, mit dem sie am Scheinwerfertragrahmen befestigt ist, kraftschlüssig mit dem Scheinwerfer verbunden und gleichzeitig gegen den Rand der Karosserieöffnung gepreßt. Daraus resultiert, daß die bei der Fertigung bedingten Karosserietoleranzen selbsttätig durch eine Relativbewegung von Blinkleuchte zum Scheiwerfer ausgeglichen werden. Nachteilig ist jedoch, daß lediglich ein Toleranzausgleich zwischen Leuchte und Karosserie stattfindet und nicht auch, wie es in den letzten Jahren unumgänglich für die Aerodynamik und der ästhetischen Gestaltung ist, für Leuchte und/oder Scheinwerfer mit dem Stoßfänger. Außerdem ist solch eine Anordnung mit seinen Führungsbahnen und Verrastungen als Teil für die Spritzgußfertigung sehr kompliziert aufgebaut.

Aufgabe der Erfindung ist es deshalb, einen Fahrzeugscheinwerfer so zu gestalten, daß ein ständiger Toleranzausgleich zwischen Karosserie z. B. Stoßfänger und Scheinwerfer möglich ist und die Mittel dazu einfach zu fertigen sind und sich kostengünstig in die Fertigung des Scheinwerfergehäuses integrieren lassen.

Die Aufgabe wird erfindungsgemäß dadurch gelöst, daß außen an der Gehäusewand eine radial nach außen weisende Lasche angeformt ist, die einen nach rückwärts weisenden, den federnden Festpunkt bildenden, in die Karosserie eingreifbaren Zapfen aufweist, auf den eine Gleitscheibe aufgeschoben und zwischen Gleitscheibe und Lasche eine Druckfeder eingesetzt ist und daß zwischen Gleitscheibe und Zapfen ein Verlierschutz angeordnet ist.

Weiterhin ist es vorteilhaft, daß der Zapfen hohl ausgebildet ist und daß die Stärke der Zapfenwandung der Wandungsstärke des Gehäuses entspricht. Beide Maßnahmen ermöglichen, die Masse von Zapfen und Lasche so gering wie möglich zu halten. Ebenfalls ist es vorteilhaft, daß der Zapfen derart stufig ausgeführt ist, daß der vordere Endabschnitt im Durchmesser kleiner als der hintere Endabschnitt ist. Dies führt einerseits zu einer besseren Führung der Feder und zum anderen besteht bei einer stärkeren Zusammenschiebung der Feder der benötigte Ausweichplatz, ohne daß die Feder in ihrer Wirkung durch ansteigende Reibung bzw.

Haftung auf dem Zapfen an Druckkraft verliert.

Ein weiterer Vorteil ist, daß der freie vordere Endabschnitt mindestens eine axial verlaufende Rippe aufweist, welche der Gleitscheibe eine bessere Führung auf dem Zapfen ermöglicht.

Außerdem ist es vorteilhaft, daß der vordere Abschnitt des Zapfens mindestens einen axial verlaufenden Schlitz aufweist, in den eine federnde Nase der Gleitscheibe hineinragt. Diese Nase bewirkt durch Rastung, daß die Gleitscheibe unverlierbar auf dem Zapfen aufgeschoben bleibt und übernimmt gleichzeitig eine Führung der Gleitscheibe.

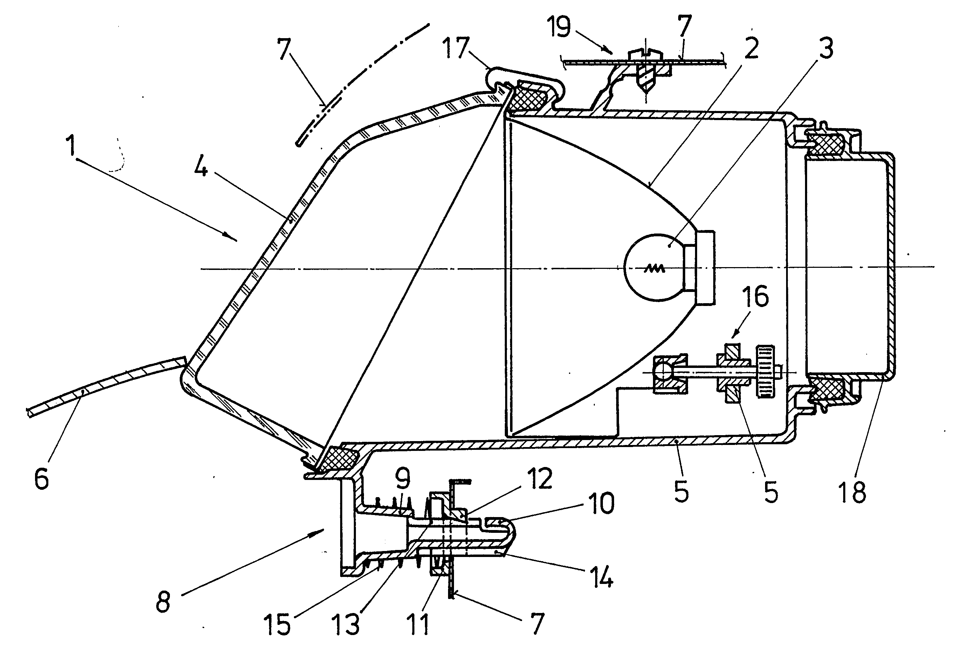

Die Erfindung ist in der Zeichnung näher dargestellt und zwar zeigt sie einen vertikalen Schnitt durch einen Fahrzeugscheinwerfer im Bereich des federnden Festpunktes.

In der Zeichnung ist ein Fahrzeugscheinwerfer (1) mit einer Glühlampe (3), einem Reflektor (2) und einer am Reflektor (2) angelenkten Leuchtweitenverstelleinrichtung (16), die sich an einem Gehäuse (5) abstützt, in einer Karosserie (7) dargestellt. Das Gehäuse (5) wird in Lichtaustrittsrichtung durch eine Streuscheibe (4) verschlossen, wobei Federn (17) die kraftschlüssige Verbindung zwischen Streuscheibe (4) und Gehäuse (5) herstellen. Die Streuscheibe (4) liegt in ihrem unteren Bereich an einem Stoßfänger (6) an. Nach hinten ist das Gehäuse (5) durch eine lösbare Kunststoffkappe (18) verschlossen, durch deren Entfernung die Leuchtweitenverstellung und/oder der Lampenwechsel möglich ist. Oberhalb am Gehäuse (5) fest angeformt, befindet sich außen eine elastische, verschraubbare Befestigungslasche (19). Unterhalb des Gehäuses (5) ist außen eine radial nach außen weisende Lasche (8) angeformt, die in einem nach rückwärts weisenden, einen federnden Festpunkt bildenden Zapfen (9) übergeht und in einem hakenförmigen Ende (10) ausläuft. Auf dem Zapfen (9) ist eine Gleitscheibe (11) aufgeschoben, die mit einer federnden Nase (12) in einem Schlitz (13) des Zapfens (9) geführt wird. Die Nase (12) und das hakenförmige Ende (10) stellen gemeinsam einen Verlierschutz für die Gleitscheibe (11) dar. Unterhalb des Zapfens (9) befindet sich eine an diesen angeformte Rippe (14), auf der ebenfalls die Gleitscheibe (11) in einer Nut geführt wird. Zwischen der Lasche (8) und der Gleitscheibe (11) ist auf dem Zapfen (9) eine Druckfeder (15) angeordnet.

Bei der Montage wird der Fahrzeugscheinwerfer an den oberen elastischen, verschraubbaren Befestigungslaschen (19) locker mit der Karosserie (7) verschraubt. Die Gleitscheibe (11) wird dagegen fest mit der Karosserie (7) verschraubt. Danach kann der Stoßfänger (6) montiert werden. Mit dem Stoßfänger (6) wird der Scheinwerfer (1) in die richtige Position gedrückt, wobei der Zapfen (9) in der Gleitscheibe (11) geführt und die Druckfeder (15) an der Gleitscheibe (11) und der Lasche (8) sich abstützend, zusammengedrückt wird. Mit dem Festschrauben des Stoßfängers (6) und den Befestigungslaschen (19) verbleibt der Scheinwerfer (1) in der für ihn bestimmten Position, die sich dadurch hervorhebt, daß die Steuscheibe (4) des Scheinwerfers (1) immer am Rand des Stoßfängers (6) anliegt.

## Ansprüche

1. Fahrzeugscheinwerfer, mit einem von einer Streuscheibe abgedeckten Gehäuse, welches verstellbar in einen Karosserieausschnitt, und zwar von hinten am Rand des Karosserieausschnittes anliegend, einsetzbar ist und einer der Verstellpunkte federnd ausgebildet ist, dadurch gekennzeichnet, daß außen an der Gehäusewand (5) eine radial nach außen weisende Lasche (8) angeformt ist, die einen nach rückwärts weisenden, den federnden Festpunkt bildenden, in die Karosserie eingreifbaren Zapfen (9) aufweist, auf den eine Gleitscheibe (11) aufgeschoben und zwischen Gleitscheibe (11) und Lasche (8) eine Druckfeder (15) eingesetzt ist und daß zwischen Gleitscheibe (11) und Zapfen (9) ein Verlierschutz (10) angeordnet ist.

2. Fahrzeugscheinwerfer nach Anspruch 1, dadurch gekennzeichnet, daß der Zapfen (9) hohl ausgebildet ist.

3. Fahrzeugscheinwerfer nach Anspruch 1 oder 2, dadurch gekennzeichnet, daß die Stärke der Zapfenwandung (9) der Wandungsstärke des Gehäuses (5) entspricht.

4. Fahrzeugscheinwerfer nach einem der vorstehenden Ansprüche, dadurch gekennzeichnet, daß der freie vordere Endabschnitt des Zapfens (9) im Durchmesser kleiner als der hintere Endabschnitt ist.

5. Fahrzeugscheinwerfer nach Anspruch 4, dadurch gekennzeichnet, daß der vordere Endabschnitt mindestens eine axial verlaufende Rippe (14) aufweist.

6. Fahrzeugscheinwerfer nach einem der vorstehenden Ansprüche, dadurch gekennzeichnet, daß der vordere Abschnitt mindestens einen axial verlaufenden Schlitz (13) aufweist, in den eine federnde Nase (12) der Gleitscheibe (11) hineinragt.